Europäisches Patentamt

European Patent Office

Office européen des brevets

Veröffentlichungsnummer: **0 285 973**
**A2**

## EUROPÄISCHE PATENTANMELDUNG

(21) Anmeldenummer: 88105033.0

(22) Anmeldetag: 29.03.88

(51) Int. Cl.⁴ **C08F 291/00 , C08F 2/08 , C09D 3/00 , C09J 3/00**

(30) Priorität: 09.04.87 DE 3712015

(43) Veröffentlichungstag der Anmeldung:
**12.10.88 Patentblatt 88/41**

(84) Benannte Vertragsstaaten:
**AT BE CH DE ES FR GB IT LI LU NL SE**

(71) Anmelder: **BASF Aktiengesellschaft
Carl-Bosch-Strasse 38
D-6700 Ludwigshafen(DE)**

(72) Erfinder: **Blum, Rainer
Bannwasserstrasse 58
D-6700 Ludwigshafen(DE)**
Erfinder: **Rehmer, Gerd, Dr.
Koenigsberger Strasse 1
D-6712 Bobenheim-Roxheim(DE)**
Erfinder: **Osterloh, Rolf, Dr.
Am Kapellenbusch 2
D-5042 Erftstadt(DE)**
Erfinder: **Sander, Hans, Dr.
Petersstrasse 2
D-6700 Ludwigshafen(DE)**

(54) **Nichtwässrige Polymerdispersionen.**

(57) Die vorliegende Erfindung betrifft nichtwäßrige Polymerdispersionen, erhältlich durch Polymerisation von
Estern (A) der Acrylsäure und/oder Methacrylsäure und/oder Ethylacrylsäure mit $C_1$-$C_{20}$-Alkoholen in organischen Lösungsmitteln oder Lösungsmittelgemischen, in denen die gebildeten Polymerisate unlöslich sind und in Gegenwart von
Copolymerisaten (B) mit einem Molekulargewicht von 500 bis 20000, erhältlich durch Masse-oder Lösungspolymerisation von monoolefinisch ungesättigten Monomeren bei Temperaturen von 180 bis 400°C und Drücken zwischen 1 und 200 bar sowie die Verwendung dieser Dispersionen zur Herstellung von Lacken, Beschichtungs-und Klebemitteln.

EP 0 285 973 A2

## Nichtwäßrige Polymerdispersionen

Die vorliegende Erfindung betrifft nichtwäßrige Polymerdispersionen. erhältlich durch Polymerisation von

Estern (A) der Acrylsäure und/oder Methacrylsäure und/oder Ethylacrylsäure mit $C_1$-$C_{20}$-Alkoholen in organischen Lösungsmitteln oder Lösungsmittelgemischen, in denen die gebildeten Polymerisate unlöslich sind und in Gegenwart von

Copolymerisaten (B) mit einem Molekulargewicht von 500 bis 20000. erhältlich durch Masse-oder Lösungspolymerisation von monoolefinisch ungesättigten Monomeren bei Temperaturen von 180 bis 400°C und Drücken zwischen 1 und 200 bar sowie die Verwendung dieser Dispersionen zur Herstellung von Lacken, Beschichtungs-und Klebemitteln.

Nichtwäßrige Polymerdispersionen (NAD) sind seit langem bekannt und z.B. von Y. Sasaki und M. Yabuta in dem Übersichtsartikel "Advances in the synthesis and film performance of non-aqueous polymer dispersions" in Hiratsuka, Organic Coating, Japan, Heft 8,1986, Seite 263 bis 281 beschrieben. Die NAD bieten die Möglichkeit, die von wäßrigen Dispersionen bekannte Unabhängigkeit der Viskosität vom Molekulargewicht auf organische Lacke zu übertragen.

Wesentlich für NAD ist, daß die Zusammensetzungen in dem gewählten Lösungsmittel unlöslich sind. Um zu vermeiden, daß einfach Fällungspolymerisate oder sich in Schichten auftrennende Polymer/Lösemittelgemische gebildet werden, ist die Mitverwendung geeigneter Dispergiermittel Stand der Technik. Durch den phasengrenzenbildenden Hilfsstoff werden die Teilchen so stabilisiert, daß bei der Lackierung perfekter Glanz und Verlauf nicht erreicht werden, weshalb den NAD der große Durchbruch, insbesondere für Automobillacke, bisher nicht gelungen ist.

Aufgabe der vorliegenden Erfindung war es. nichtwäßrige Dispersionen bereitzustellen. die auch ohne Dispergiermittel lagerstabil sind und Filme von sehr gutem Glanz und Verlauf ergeben.

Demgemäß wurden nichtwäßrige Polymerdispersionen gefunden, erhältlich durch Polymerisation von

Estern (A) der Acrylsäure und/oder Methacrylsäure und/oder Ethylacrylsäure mit $C_1$-$C_{20}$-Alkoholen in organischen Lösungsmitteln oder Lösungsmittelgemischen, in denen die gebildeten Polymerisate unlöslich sind und in Gegenwart von

Copolymerisaten (B) mit einem Molekulargewicht von 500 bis 20000. erhältlich durch Masse-oder Lösungspolymerisation von monoolefinisch ungesättigten Monomeren bei Temperaturen von 180 bis 400°C und Drücken zwischen 1 und 200 bar.

Als Komponente (A) können Ester der Acrylsäure. Methacrylsäure oder Ethylacrylsäure mit aliphatischen $C_1$-$C_{20}$-Alkoholen, bevorzugt $C_1$-$C_8$-Alkoholen verwendet werden, wie Methylacrylat, Methylmethacrylat, Methylethacrylat, Ethylacrylat, Ethylmethacrylat, Propylacrylat, Propylmethacrylat, n-Butylacrylat, sek.-Butylacrylat, iso-Butylacrylat, tert.-Butylacrylat. n-Butylmethacrylat, sek.-Butylmethacrylat, iso-Butylmethacrylat. tert.-Butylmethacrylat, n-Butylethacrylat, 2-Ethylhexylacrylat, 2-Ethylhexylmethacrylat, Laurylacrylat. Laurylmethacrylat, Octadecylacrylat, Octadecylmethacrylat, Methylglykolacrylat, Methylglykolmethacrylat, Ethylglykolacrylat, Ethylglykolmethacrylat, n-Propylglykolacrylat, n-Propylglykolmethacrylat, iso-Propylglykolacrylat, iso-Propylglykolmethacrylat, n-Butylglykolacrylat, n-Butylglykolmethacrylat, sek.-Butylglykolacrylat, iso-Butylglykolacrylat, tert.-Butylglykolacrylat, sek.-Butylglykolmethacrylat. iso-Butylglykolmethacrylat und tert.-Butylglykolmethacrylat, sowie mit cycloaliphatischen $C_6$-$C_{20}$-Alkoholen. bevorzugt $C_6$-$C_{10}$-Alkoholen wie Cyclohexylacrylat, Cyclohexylmethacrylat, 4-tert.-Butylcyclohexyl-1-acrylat, 2-Decalylacrylat und Tetrahydrofurfurylacrylat sowie mit aromatischen $C_6$-$C_{20}$-Alkoholen, wie Phenylacrylat, Phenylmethacrylat, Anisylacrylat und araliphatischen $C_7$-$C_{20}$-Alkoholen, wie Benzylacrylat. Benzylmethacrylat, $\beta$-Phenylethylacrylat und $\beta$-Phenoxyethylacrylat.

Weiterhin sind Monoester der Acrylsäure, Methacrylsäure oder Ethylacrylsäure mit 2-bis 6-wertigen $C_2$-$C_{18}$-Alkoholen. bevorzugt $C_2$-$C_8$-Alkoholen, geeignet, wie $\beta$-Hydroxyethylacrylat, $\beta$-Hydroxyethylmethacrylat, Propylenglykolmonoacrylat, Propylenglykolmonomethacrylat, Butandiol-1,4-monoacrylat, Butandiol-1,4-monomethylacrylat, Pentandiol-1,5-monoacrylat. Pentandiol-1,5-monomethacrylat. Hexandiol-1,6-monoacrylat, Hexandiol-1,6-monomethacrylat, Glycerinmonoacrylat, Glycerinmonomethacrylat, Trimethylolpropanmonoacrylat, Trimethylolpropanmonomethacrylat, Pentaerythritmonoacrylat, Pentaerythritmonomethacrylat, 1,4-Cyclohexan-dimethanolmonoacrylat und 1,4-Cyclohexan-dimethanolmonomethacrylat.

Bevorzugt werden Methylmethacrylat. n-Butylacrylat, n-Butylmethacrylat, tert.-Butylacrylat, tert.-Butylmethacrylat, iso-Butylacrylat, iso-Butylmethacrylat, Ethylhexylacrylat, Ethylhexylmethacrylat und Hydroxyethylacrylat eingesetzt.

Die Komponente (A) wird in einer Menge von 30 bis 95 Gew.%. bevorzugt 50 bis 80 Gew.% eingesetzt.

Geeignete Aufbaukomponenten für die Herstellung der Copolymerisate (B) sind Vinylaromaten wie Styrol, α-Methylstyrol, Chlorstyrol, Vinyltoluol, tert.-Butylstyrol; Acrylsäure, Methacrylsäure, Ethylacrylsäure sowie Ester dieser Säuren mit $C_1$-$C_{20}$-Alkoholen, wie sie beispielsweise bei der Komponente (A) beschrieben sind, Monoester dieser Säuren mit 2-bis 6-wertigen Alkoholen, wie sie beispielsweise bei der Komponente (A) beschrieben sind, Maleinsäure, Fumarsäure sowie deren $C_1$-$C_4$-Mono-und -Dialkylester, Acrylnitril, Methacrylnitril, Acrylamidmethylolether, Methacrylamidmethylolether, Acrylamid, Methacrylamid, Glycidylacrylat und Glycidylmethacrylat, Vinylester von $C_2$-$C_4$-Carbonsäuren, wie Vinylacetat und Vinylpropionat, sowie Vinylether mit 3 bis 10 Kohlenstoffatomen, Vinylhalogenide wie Vinylchlorid und Vinylidenchlorid sowie mehrfach olefinisch ungesättigte Verbindungen wie Butadien und Isopren.

Bevorzugte Monomere sind Styrol, Acrylsäure, Methacrylsäure, Methylmethacrylat, Butylacrylat, t-Butylacrylat, t-Butylmethacrylat und 2-Ethylhexylacrylat.

Die Herstellung der Komponente (B) erfolgt nach bekannten Methoden der Massepolymerisation oder Lösungspolymerisation, wie sie z.B. in der DE-OS 32 25 875 beschrieben sind, bei Temperaturen von 180 bis 400°C, bevorzugt 200 bis 350°C, besonders bevorzugt 200 bis 300°C, bei Drücken zwischen 1 und 200 bar, vorzugsweise 20 bis 50 bar, in Abwesenheit oder Gegenwart von hochsiedenden Lösungsmittel wie Aromatengemischen mit einem Siedebereich von 155 bis 185°C sowie Aromaten-/Aliphaten-Cycloaliphatengemischen mit einem Siedebereich von 120 bis 250°C und gegebenenfalls in Anwesenheit von Polymerisationsinitiatoren und Reglern. Die Copolymerisate (B) haben mittlere Molekulargewichte (Zahlenmittel) von 500 bis 20000, bevorzugt 1000 bis 10000 und Hydrierjodzahlen (DIN 53 241) von 1,3 bis 51, vorzugsweise 2,5 bis 25,4.

Bei der Herstellung der NAD wird das Copolymerisat im allgemeinen vor der Reaktion in den anderen Monomeren gelöst. Dies kann in dem zur Polymerisation verwendeten Lösungsmittel geschehen, aber auch in einem der Monomeren oder dem Monomerengemisch.

Die Komponente (B) wird in Mengen von 5 bis 70 Gew.%, bevorzugt 20 bis 50 Gew.% eingesetzt.

Als Komponente (C) können Styrol, α-Methylstyrol, Chlorstyrol, Vinyltoluol, tert.-Butylstyrol, Acrylamidmethylolether, Methacrylamidmethylolether, Acrylsäure, Methacrylsäure, Ethylacrylsäure weiterhin Maleinsäure, Fumarsäure sowie deren $C_1$-$C_4$-Mono-und -Dialkylester, Maleinsäureanhydrid, Acrylnitril, Acrylamid oder Methacrylamid in Mengen von 0 bis 50 Gew.% mitverwendet werden. Für den Fall der Mitverwendung haben sich 5 bis 50 Gew.%, bevorzugt 10 bis 40 Gew.% bewährt.

Die Herstellung der NAD erfolgt nach bekannten Polymerisationsmethoden bevorzugt in Lösungsmitteln wie Aromatengemischen mit einem Siedebereich von 120 bis 250°C sowie Aromaten-/Aliphaten-/Cycloaliphatengemischen mit einem Siedebereich von 120 bis 250°C bei Temperaturen von 60 bis 180°C, bevorzugt 140 bis 160°C, bei Normaldruck bis 10 bar mit Polymerisationsinitiatoren wie Cumolhydroperoxid, tert.-Butylperbenzoat, Benzoylperoxid und gegebenenfalls Reglern wie Dodecylmercaptan oder Mercaptoethanol.

Es sind auch andere Lösemittel geeignet, die äußere Phase der NAD's zu bilden, z.B. Alkohole, Ester, Ether, Ketone, Glykolether u.a. Die Nennung dieser Lösemittel soll die Erfindung nicht auf deren Anwendung beschränken. Kriterium der Auswahl ist, daß sich die gebildeten Copolymerisate nicht in dem gewählten Lösemittel lösen und daß der Siedepunkt und das Verdunstungsverhalten der gewünschten Lackanwendung angepaßt sind. Mit Gemischen von Lösemitteln unterschiedlicher Polarität ist es möglich, Lacke zu formulieren, die in der Applikationsform eine niedrige Viskosität bei sehr geringer Thixotropie besitzen. Beim Verdunsten der polaren niedersiedenden Lösemittel erhöht sich die Viskosität und die Lacke werden thixotrop. Diese kombinierte Beeinflussung durch Polaritätsänderung und Thixotropieänderung erlaubt es, Lacke mit optimaler Rheologie zu entwickeln.

Die Herstellung der NAD kann auch zweistufig erfolgen, indem zunächst in einem Lösungsmittel oder Lösungsmittelgemisch die Komponente (B) hergestellt wird, in deren Gegenwart dann die Komponenten (A) und (C) copolymerisiert werden.

Die NAD können je nach eingesetzten Comonomeren in der dispersen Phase unvernetzt bis vernetzt sein. Vernetzung tritt im allgemeinen bei Verwendung von beispielsweise Glycidylacrylat, Glycidylmethacrylat und Acrylamidmethylolether als Comonomere auf.

Die NAD weisen im allgemeinen einen Feststoffgehalt von 50 bis 80 Gew.%, bevorzugt 70 bis 80 Gew.% auf, bei Viskositäten von 1000 bis 3000 mPas (20°C).

Die dispergiermittelfreien NAD bilden sich spontan, sind lagerstabil und ergeben nach dem Auftrag auf Substrate aus Metall, Glas, Holz und Kunststoff Filme von sehr gutem Glanz und Verlauf.

Die NAD können mit Lackpolyisocyanaten, Polyurethanharzen, Aminoplastharzen und Epoxidharzen, gegebenenfalls mit geeigneten Katalysatoren und Hilfsstoffen zu Lacken, Beschichtungs-und Klebemitteln, insbesondere Metallic-Decklacken kombiniert werden.

|  | Beispiel 1 | Beispiel 2 (Vergleichsbeispiel) |
|---|---|---|
| Zulauf I: |  |  |
| Butylacrylat | 300 g | 300 g |
| tert.-Butylacrylat | 300 g | 300 g |
| Hydroxyethylacrylat | 200 g | 200 g |
| Styrol | - | 168 g |
| Methacrylsäure | - | 32 g |
| * (gelöst in den anderen Bestandteilen von Zulauf 1) | 200 g | - |
| Zulauf II: |  |  |
| tert.-Butylperbenzoat | 40 g | 40 g |

|  | Beispiel 1 | Beispiel 2 (Vergleichsbeispiel) |
|---|---|---|
| Zulauf I: |  |  |
| Zulauf III: |  |  |
| tert.-Butylperbenzoat | 10 g | 10 g |
| Vorlage: |  |  |
| Benzin, Siedebereich 155-185°C, Aromatengehalt ca. 20 %) | 350 g | 350 g |

* = Copolymerisat (B), das aus 84 Gew.% Styrol und 16 Gew.% Methacrylsäure hergestellt wurde mit einem mittleren Molekulargewicht von 2950

Die in ein Reaktionsgefäß eingebrachte Vorlage wurde auf 160°C erhitzt und Zulauf I und II in 2 Stunden zugegeben, wobei die Temperatur 152 bis 163°C betrug. Es wurde 1 Stunde bei 160 bis 163°C weitergerührt, dann wurde Zulauf III in 1 Stunde zugegeben und eine weitere Stunde nachpolymerisiert.

Beispiel 3

In einem Reaktionsgefäß mit Druckzulaufgefäßen wurde eine Zweistufenpolymerisation durchgeführt.

Stufe 1: Herstellung des Copolymerisates (B) Vorlage: 750 g Benzin (Aromatengehalt 20 %), Siedebereich 155-185°C
Zulauf I: 336 g Styrol
64 g Methacrylsäure
20 g Cumolhydroperoxid

Die Vorlage wurde unter Stickstoff auf 270°C erhitzt, wobei sich ein Druck von 3,7 bar einstellte; Zulauf I wurde in 30 min zugepreßt, der Druck stieg dabei auf 5,4 bar. Nach 30 min Nachpolymerisation wurde die Temperatur auf 150°C gesenkt und der Restdruck von 0,8 bar über einen gekühlten Rückflußkühler entspannt.

Stufe 2: Herstellung der NAD Zulauf II: 600 g Butylacrylat
600 g tert.-Butylacrylat
400 g Hydroxyethylacrylat
60 g tert.-Butylperbenzoat
Zulauf III: 20 g tert.-Butylperbenzoat

Zu der auf 150°C gekühlten Stufe 1 wurde in 2 Stunden Zulauf II und nach einer weiteren Stunde Zulauf III in 30 min zugegeben, worauf noch 1 Stunde nachpolymerisiert und gekühlt wurde.

Kenndaten der Polymerlösungen

|  | Beispiel 1 | Beispiel 2 (Vergleich) | Beispiel 3 |
|---|---|---|---|
| Viskosität (mPas) ($20^0$C, D: 5 $s^{-1}$) | 2 400 | 40 000 | 1 740 |
| Auslaufzeit Becher 4 (DIN 53 211) | 183" | nicht meßbar zu hochviskos | 99" |
| nichtflüchtige Anteile (DIN 53 216) | 75 % | 75 % | 75 % |
| K-Wert (analog DIN 53 720) 3 %ig in Aceton | 12,5 | 11,8 | 11,0 |
| Aussehen | trüb | klar | weißtrüb |

Prüfung der Polymerlösungen

Aus den Polymerlösungen nach Beispiel 1 und 2 wurden Klarlacke formuliert, wie sie als Decklacke für Metallic-Lackaufbauten im Automobilbau Verwendung finden.

Zur Prüfung des Ablaufverhaltens wurden Filme mit steigender Schichtdicke auf Bleche von 6 cm $\times$ 25 cm aufgerakelt, bei Raumtemperatur waagrecht liegend 10 min abgelüftet und dann senkrecht an der Schmalseite hängend, 30 min bei 140°C eingebrannt. Es wurde die Trockenschichtdicke angegeben bei der noch kein Ablaufen erkennbar ist.

|  | Lack 1 | Lack 2 | Lack 3 | Lack 4 | Lack 5 | Lack 6 |
|---|---|---|---|---|---|---|
| Polymerlösung nach Beispiel | 1 | 1 | 1 | 2 | 2 | 2 |
| Menge der Polymerlösung | 87 | 87 | 87 | 87 | 87 | 87 |
| Melamin-Formaldehyd-Harz mit Isobutanol verethert, hochwärmereaktiv | 64 | 64 | 64 | 64 | 64 | 64 |
| Benzylamin | - | 2 | 2 | - | 2 | 2 |

5

| | Lack 1 | Lack 2 | Lack 3 | Lack 4 | Lack 5 | Lack 6 |
|---|---|---|---|---|---|---|
| Hexamethylen-diamin | - | - | 0,5 | - | - | 0,5 |
| Auslaufzeit D 4 (vor Propanol-zugabe) | 258" | 315" | 346" | 510" | 680" | >700" |
| Propanol | 45 | 45 | 45 | 45 | 45 | 45 |
| Auslaufzeit D 6 (nach Propanol-zugabe) | 47" | 55" | 62" | 126" | 214" | 226" |
| Läuferfreie Trocken-schichtdicke [$\mu$m] | 55 | 63 | 72 | 25 | 42 | 42 |
| Pendeldämpfung (DIN 53157) bei 40$\mu$m | 146 | 146 | 143 | 151 | 148 | 152 |
| Tiefung (DIN 53156) | 7,4 | 7,0 | 8,1 | 6,4 | 6,2 | 7,2 |
| Gitterschnittest (DIN 53151) | 1 | 1 | 1 | 1 | 2 | 1 |

Die Polymerlösungen nach Beispiel 1, 2 und 3 wurden im Verhältnis 65:35 mit einem Melamin-Formaldehydharz (mit Isobutanol verethert, hoch wärmereaktiv) abgemischt und mit Isobutanol/Xylol auf einen Feststoffgehalt von 55 Gew.% eingestellt. Die Lösungen wurden auf entfettete Stahlbleche mit einer Rakel mit 100 $\mu$m Spalthöhe aufgezogen und 30 min bei 140°C eingebrannt.

| | Beispiel 1 | Beispiel 2 (Vergleich) | Beispiel 3 |
|---|---|---|---|
| Auslaufzeit der 55 gew.%igen Lösung Becher 4 (DIN 53211) | 36" | 219" | 28" |
| Tiefung (DIN 53156) | 10 | 4,3 | 6,7 |
| Pendeldämpfung (DIN 53157) | 138" | 112" | 146" |
| Gitterschnittest (DIN 53151) | 0 | 3 | 1 |

## Ansprüche

1. Nichtwäßrige Polymerdispersionen, erhältlich durch Polymerisation von

Estern (A) der Acrylsäure und/oder Methacrylsäure und/oder Ethylacrylsäure mit $C_1$-$C_{20}$-Alkoholen in organischen Lösungsmitteln oder Lösungsmittelgemischen, in denen die gebildeten Polymerisate unlöslich sind und in Gegenwart von

Copolymerisaten (B) mit einem Molekulargewicht von 500 bis 20000, erhältlich durch Masse-oder Lösungspolymerisation von monoolefinisch ungesättigten Monomeren bei Temperaturen von 180 bis 400°C und Drücken zwischen 1 und 200 bar.

2. Nichtwäßrige Polymerdispersionen nach Anspruch 1, erhältlich durch Polymerisation von 30 bis 95 Gew.% Estern (A) in Gegenwart von 5 bis 70 Gew.% Copolymerisat (B).

3. Nichtwäßrige Polymerdispersionen nach den Ansprüchen 1 oder 2, erhältlich durch Copolymerisation von 30 bis 90 Gew.% Estern (A) mit 5 bis 50 Gew.% weiteren Comonomeren (C) in Gegenwart von 5 bis 70 Gew.% Copolymerisat (B).

4. Nichtwäßrige Polymerdispersionen nach Anspruch 1, erhältlich unter Verwendung von Monoestern der Acrylsäure und/oder Methacrylsäure und/oder Ethylacrylsäure mit 1-bis 6-wertigen aliphatischen, cycloaliphatischen und/oder aromatischen Alkoholen als Komponente (A).

5. Nichtwäßrige Polymerdispersionen nach den Ansprüchen 1 und 2, erhältlich unter Verwendung von überwiegenden Anteilen von Styrol und untergeordneten Anteilen von Acrylsäure, Methacrylsäure, Maleinsäure, Maleinsäureanhydrid und Estern der genannten Säuren mit $C_1$-$C_{20}$-Alkoholen als Aufbaukomponente für die Copolymerisate (B).

6. Nichtwäßrige Polymerdispersionen nach den Ansprüchen 1 bis 3, erhältlich unter Verwendung von Styrol, $\alpha$-Methylstyrol, Chlorstyrol, Vinyltoluol, tert.-Butylstyrol, Acrylsäure, Methacrylsäure, Maleinsäure, Maleinsäureanhydrid, Maleinsäureester, Acrylnitril, Acrylamid, Methacrylamid, Acrylamidalkylolether und Methacrylamidalkylolether als Comonomere (C).

7. Verwendung der nichtwäßrigen Polymerdispersionen gemäß den Ansprüchen 1 bis 4 zur Herstellung von Lacken, Beschichtungs-und Klebemitteln, insbesondere für Metallic-Decklacke.

8. Beschichteter Gegenstand, erhältlich unter Verwendung der Lacke und Beschichtungsmittel gemäß Anspruch 5.